(19) Europäisches Patentamt
European Patent Office
Office européen des brevets

(11) **EP 3 616 161 B1**

(12) **FASCICULE DE BREVET EUROPEEN**

(45) Date de publication et mention de la délivrance du brevet:
**23.08.2023 Bulletin 2023/34**

(21) Numéro de dépôt: **18714322.7**

(22) Date de dépôt: **15.03.2018**

(51) Classification Internationale des Brevets (IPC):
***G06T 7/254*** *(2017.01)*

(52) Classification Coopérative des Brevets (CPC):
**G06T 7/254;** G06T 2207/10016; G06T 2207/20036; G06T 2207/30236

(86) Numéro de dépôt international:
**PCT/FR2018/050627**

(87) Numéro de publication internationale:
**WO 2018/197763 (01.11.2018 Gazette 2018/44)**

(54) **PROCÉDÉ DE TRAITEMENT D'IMAGES POUR LA SUPPRESSION DE ZONES LUMINEUSES**

BILDVERARBEITUNGSVERFAHREN ZUR ENTFERNUNG VON LICHTZONEN

IMAGE-PROCESSING METHOD FOR REMOVING LIGHT ZONES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.04.2017 FR 1753584**

(43) Date de publication de la demande:
**04.03.2020 Bulletin 2020/10**

(73) Titulaires:
• **Continental Automotive France S.A.S 31100 Toulouse (FR)**
• **Continental Automotive GmbH 30165 Hannover (DE)**

(72) Inventeurs:
• **GUERRERO, David 31200 Toulouse (FR)**
• **DAURENJOU, David 31380 Montastruc-la-Conseillère (FR)**

(56) Documents cités:
**US-A- 5 847 755       US-A1- 2014 003 720 US-A1- 2015 278 616**

**EP 3 616 161 B1**

**Description**

L'invention se rapporte au domaine du traitement d'images et concerne plus particulièrement un procédé de traitement d'images permettant de supprimer des zones lumineuses susceptibles de masquer des objets ou des personnes en mouvement dans un flux vidéo d'images capturées par une caméra.

De nos jours, il est connu de détecter des objets ou des personnes en mouvement dans un flux vidéo d'images capturées par une caméra. Une telle détection peut avoir plusieurs buts. Par exemple, lorsque la caméra est fixée sur un lampadaire, il est connu de détecter les piétons circulant à proximité du lampadaire afin d'augmenter la luminosité et éclairer ainsi davantage l'ensemble de la zone ou bien d'orienter le flux de lumière dans leur direction. Dans un autre exemple, il peut être utile de détecter des individus circulant dans une zone prédéterminée dans un but de surveillance.

Une solution connue sous le nom de Modèle de Mélange Gaussien (GMM ou « Gaussian Mixture Model » en langue anglaise) consiste à appliquer un ensemble de fonctions de distribution Gaussienne aux pixels des images acquises par la caméra afin de différencier les pixels dont la luminosité ne varie pas ou faiblement, dont on considère qu'ils représentent l'arrière-plan de la scène filmée, des pixels dont la luminosité varie plus fortement, dont on considère qu'ils représentent alors des objets en mouvement.

Un problème se pose, en particulier la nuit, lorsque l'environnement filmé par la caméra présente des zones de forte luminosité qui ne correspondent pas à des objets lumineux. Dans ce cas, ces zones lumineuses peuvent être considérées comme des objets en mouvement sur les images lorsqu'on leur applique un ensemble de fonctions de distribution Gaussienne, ce qui peut conduire à des erreurs d'interprétation ou de manipulation lors du traitement d'images. Par exemple, lorsqu'on souhaite effectuer le suivi d'un véhicule roulant de nuit, la caméra peut se retrouver à suivre la zone éclairée par les phares du véhicule plutôt que le véhicule lui-même, ce qui est problématique dans le cas d'une surveillance. De même, il peut aussi être difficile, voire impossible, de détecter la forme d'objets éclairés par les phares d'un véhicule dès lors que ceux-ci sont noyés dans la lumière des phares, ce qui représente là encore un inconvénient. Les documents US2015/0278616 A1, US5847755 A et US2014/0003720 A1 représentent l'état de la technique pertinent.

Il s'avère donc avantageux de proposer une solution de traitement d'images permettant de supprimer les zones de pollution lumineuse apparaissant dans les images afin de détecter correctement des objets ou des personnes dans l'environnement de la caméra.

A cette fin, l'invention a pour objet un procédé de traitement d'images pour le filtrage de la pollution lumineuse apparaissant dans un flux vidéo d'images acquis par une caméra vidéo.

Ledit procédé est remarquable en ce qu'il comprend, pour une image courante dudit flux vidéo d'images, les étapes de :

- soustraction de l'arrière-plan représenté dans ladite image courante afin d'obtenir le premier-plan de l'image courante,
- détermination, pixel par pixel, d'une matrice de surbrillance identifiant les pixels de l'image courante dont la luminosité est supérieure à la luminosité moyenne dans le temps des pixels de l'image calculée à partir d'une pluralité d'images successives extraites du flux d'images,
- détermination d'une matrice de compensation par bornage des valeurs des pixels de la matrice de surbrillance déterminée entre une valeur minimum et une valeur maximum,
- segmentation de la matrice de surbrillance déterminée,
- détermination d'un masque à partir de la matrice de surbrillance segmentée,
- application dudit masque à la matrice de compensation déterminée afin d'obtenir une matrice de filtrage, et
- filtrage du premier-plan de l'image courante par l'application de ladite matrice de filtrage afin de réduire les zones de pollution lumineuse dans les images du flux d'images.

Par les termes « image courante », on entend l'image du flux en cours de traitement, les images du flux étant traitées successivement dans l'ordre du flux. En outre, la matrice de surbrillance caractérise les pixels plus lumineux que la normale dans le flux vidéo d'images.

Grâce au procédé selon l'invention, les zones lumineuses d'une image pouvant représenter un inconvénient pour la détection d'un objet ou d'une personne sont majoritairement ou totalement supprimées, rendant ladite détection aisée, rapide et fiable. En particulier, le procédé selon l'invention permet d'éliminer des zones détectées comme étant des objets par la soustraction de fond mais qui sont en réalité des zones éclairées, par exemple par des phares de véhicules. Le procédé selon l'invention s'applique avantageusement à des images dans lesquelles on souhaite détecter des objets ou de personnes en mouvement, sans que cela ne soit limitatif. De même, le procédé selon l'invention s'applique avantageusement à des images dans lesquelles on souhaite détecter des objets ou des personnes en condition d'éclairage faible, notamment la nuit.

Avantageusement, le procédé comprend, avant les étapes de soustraction et de détermination d'une matrice de surbrillance, une étape de prétraitement de l'image courante.

De préférence, la détermination d'une matrice de surbrillance comprend les sous-étapes de :

- calcul de la moyenne dans le temps de la luminosité de chaque pixel de l'image courante à partir d'une pluralité d'images successives extraites du flux d'images,
- calcul de la moyenne dans le temps des écarts-type de la luminosité de chaque pixel de l'image courante à partir d'une pluralité d'images successives extraites du flux d'images,
- détermination de la matrice de surbrillance identifiant les pixels de l'image courante dont la luminosité est supérieure à la luminosité moyenne à partir de la moyenne de la luminosité de chaque pixel de l'image courante calculée et de la moyenne dans le temps des écarts-type de la luminosité de chaque pixel de l'image courante calculée.

Dans une forme de réalisation préférée, la matrice de surbrillance est déterminée pixel par pixel selon l'équation suivante :

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > \rho \\ and \\ Frame_{[x,y]} > GlobalAverage_{[x,y]} \end{cases} \\ 0, & Otherwise \end{cases}$$

Où $Frame_{[x, y]}$ est l'image courante, [x, y] sont les coordonnées d'un pixel de l'image, $GlobalAverage_{[x,y]}$ est la moyenne de la luminosité dans le temps de chaque pixel de l'image courante $Frame_{[x, y]}$ à partir d'une pluralité d'images successives extraites du flux d'images, $GlobalStdDeviation_{[x,y]}$ est la moyenne dans le temps des écarts-type de la luminosité de chaque pixel de l'image courante $Frame_{[x, y]}$ à partir d'une pluralité d'images successives extraites du flux d'images et $\rho$ est un coefficient de réduction de bruit (à établir selon l'application). De préférence, la valeur de $\rho$ est proche de 0, par exemple inférieure à 0.025, afin de réduire le bruit efficacement dans la matrice de surbrillance.

Avantageusement, la détermination de la matrice de compensation comprend, suite au bornage des valeurs des pixels, une normalisation desdites valeurs bornées, de préférence entre 0 et 1.

Selon un aspect de l'invention, la segmentation de la matrice de surbrillance déterminée comprend les sous-étapes de :

- lissage de la matrice de surbrillance déterminée,
- limitation de la valeur des pixels de la matrice de surbrillance déterminée en-dessous d'une valeur seuil, et
- binarisation de la matrice de surbrillance limitée afin d'obtenir la matrice de surbrillance segmentée.

Avantageusement encore, la détermination du masque comprend les sous-étapes de :

- application d'un processus morphologique à la matrice de surbrillance segmentée,
- détermination, dans ladite matrice de surbrillance morphologiquement traitée, des groupes de pixels dont le nombre de pixels est inférieur ou supérieur à un seuil prédéterminé, et
- binarisation à la valeur 1 des pixels des groupes dont le nombre déterminé de pixels est supérieur au seuil prédéterminé et à la valeur 0 des pixels des groupes dont le nombre déterminé de pixels est inférieur au seuil prédéterminé.

Selon un aspect de l'invention, le procédé comprend, antérieurement à l'étape de filtrage, une étape de lissage de la matrice de filtrage.

Selon un autre aspect de l'invention, le procédé comprend une étape de détection d'une personne ou d'un objet représenté dans le flux d'images filtrées.

L'invention concerne aussi un module de traitement pour le filtrage de la pollution lumineuse apparaissant sur un flux d'images acquis par une caméra vidéo, ledit module de traitement étant remarquable en ce qu'il est configuré pour recevoir un flux d'images de ladite caméra vidéo, et, pour une image courante dudit flux d'images :

- soustraire l'arrière-plan représenté dans ladite image courante afin d'obtenir le premier-plan de l'image courante,
- déterminer, pixel par pixel, une matrice de surbrillance identifiant les pixels de l'image courante dont la luminosité est supérieure à la luminosité moyenne dans le temps des pixels de l'image calculée à partir d'une pluralité d'images successives extraites du flux d'images,
- déterminer une matrice de compensation par bornage des valeurs des pixels de la matrice de surbrillance déterminée entre une valeur minimum et une valeur maximum,
- segmenter la matrice de surbrillance déterminée,

- déterminer un masque à partir de la matrice de surbrillance segmentée,
- appliquer ledit masque à la matrice de compensation déterminée afin d'obtenir une matrice de filtrage, et
- filtrer le premier-plan de l'image courante par l'application de ladite matrice de filtrage lissée afin de réduire les zones de pollution lumineuse dans les images du flux d'images.

De préférence, le module de traitement est configuré pour lisser la matrice de filtrage.

De préférence encore, le module de traitement est configuré pour détecter une personne ou un objet représenté dans le flux d'images filtrées.

L'invention concerne également un système de traitement d'images pour le filtrage de la pollution lumineuse apparaissant sur un flux d'images acquis par une caméra vidéo. Ledit système est remarquable en ce qu'il comprend une caméra vidéo et un module de traitement, tel que présenté précédemment, relié à ladite caméra vidéo par un lien de communication.

D'autres caractéristiques et avantages de l'invention apparaîtront lors de la description qui suit faite en regard des figures annexées données à titre d'exemples non limitatifs et dans lesquelles des références identiques sont données à des objets semblables.

- La **figure 1** représente schématiquement une forme de réalisation du système selon l'invention dans lequel la source de lumière est un lampadaire équipé d'une caméra vidéo.
- La **figure 2** illustre un mode de réalisation du procédé selon l'invention.
- La **figure 3** est une image capturée de nuit par une caméra montée sur un lampadaire et sur laquelle on distingue un véhicule automobile ainsi que les zones éclairées par ses phares.
- La **figure 4** est l'image de la **figure 3** qui a été traitée par le procédé selon l'invention et qui montre que les détections dans les zones éclairées par les phares du véhicule ont sensiblement disparues.

Le système de traitement d'images selon l'invention permet de supprimer la plupart des zones lumineuses susceptibles de masquer des objets ou des personnes dans les images, afin notamment d'en améliorer la détection. Ces objets ou personnes peuvent par exemple être respectivement des véhicules ou des piétons circulant sur une voie ou un trottoir.

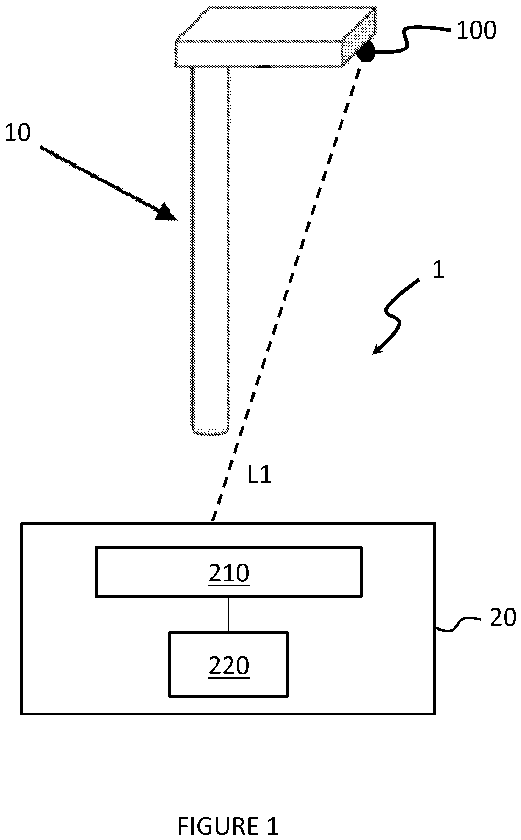

On a représenté schématiquement à la **figure 1** un exemple de système 1 selon l'invention. Le système 1 comprend un lampadaire 10 sur lequel est montée une caméra 100 vidéo et un module de traitement 20 relié à ladite caméra 100 par un lien de communication L1 afin de recevoir un flux vidéo d'images capturées par la caméra 100.

Ce lien de communication L1 peut être filaire (câble électrique) ou sans fil (par exemple via une connexion de type Wifi, Wimax, 4G ou tout autre type de connexion connue).

Dans la forme de réalisation illustrée, la caméra 100 est montée sur le lampadaire 10 afin de filmer l'environnement dudit lampadaire 10, par exemple pour surveiller une voie de circulation. On notera que l'invention peut s'appliquer à tout type de caméra 100 montée sur tout type de support afin de filmer tout type de zone dans laquelle on souhaite détecter la présence de personnes ou d'objets, tels que par exemple des piétons ou des véhicules automobiles.

De préférence, la caméra 100 est apte à rester stationnaire au moins pendant un intervalle de temps prédéterminé afin d'acquérir un flux vidéo d'images d'une même zone, par exemple une portion d'une voie de circulation.

Dans la forme de réalisation préférée décrite ci-après (nullement limitative), le module de traitement 20 est configuré pour réaliser une série d'opérations sur les images du flux vidéo capturé par la caméra.

A cette fin, le module de traitement 20 comprend de préférence une zone mémoire 220 et un processeur 210 adapté pour mettre en oeuvre des instructions stockées dans ladite zone mémoire 220 et permettant de réaliser les opérations décrites ci-après sur chaque image courante du flux.

Par les termes « image courante », on entend l'image traitée par le module de traitement 20 dans le flux vidéo d'image reçu de la caméra 100, les images du flux étant traitées successivement.

Tout d'abord, le module de traitement 20 est configuré pour soustraire l'arrière-plan représenté dans l'image courante afin d'obtenir le premier-plan de ladite image courante. Une telle soustraction peut par exemple être réalisée en utilisant un Modèle de Mélange Gaussien (GMM ou « Gaussian Mixture Model » en langue anglaise) comme cela sera décrit ci-après dans la mise en oeuvre de l'invention.

Pour chaque image du flux, le module de traitement 20 est tout d'abord configuré pour déterminer une matrice de surbrillance identifiant les pixels de l'image courante dont la luminosité est supérieure à la luminosité moyenne dans le temps des pixels de l'image. Cette matrice de surbrillance caractérise les pixels représentant des éléments dont la luminosité a augmenté, potentiellement à cause d'une source lumineuse. A titre d'exemple, de tels pixels peuvent représenter la lumière des phares d'un véhicule automobile circulant sur une route filmée par la caméra 100.

Dans une forme de réalisation préférée, afin de déterminer cette matrice de surbrillance, le module de traitement 20 est configuré pour calculer la moyenne dans le temps de la luminosité de chaque pixel de l'image courante à partir d'une pluralité d'images successives extraites du flux d'images, pour calculer la moyenne dans le temps des écarts-type de la luminosité de chaque pixel de l'image courante à partir d'une pluralité d'images successives extraites du flux d'images et pour déterminer une matrice de surbrillance identifiant les pixels de l'image courante dont la luminosité est supérieure à la luminosité moyenne à partir de la moyenne de la luminosité de chaque pixel de l'image courante calculée et de la moyenne des écarts-type de la luminosité de chaque pixel de l'image courante calculé.

A cette fin, le module de traitement 20 est configuré pour calculer, pour une image Frame courante, la matrice des moyennes de luminosité *GlobalAverage*$_t$ dans l'instant t en calculant une enveloppe exponentielle selon l'équation suivante :

$$\text{GlobalAverage}_{t[x,y]} = (1 - \alpha) \times (\text{GlobalAverage}_{t-1[x,y]}) + (\alpha) \times (\text{Frame}_{[x,y]})$$

où $\alpha$ est un paramètre scalaire entre 0 et 1 à établir selon chaque application qui contrôle la décadence de l'enveloppe exponentielle, Frame$_{[x,y]}$ est la valeur du pixel de coordonnées [x, y] de l'image courante (c'est-à-dire sa valeur de luminosité). La valeur initiale de GlobalAveraget peut être la première image du flux vidéo reçu de la caméra 100.

Toujours dans cette forme de réalisation, le module de traitement 20 est configuré pour calculer l'écart-type moyen *StdDeviationFrame* de la luminosité de chaque pixel de l'image courante Frame par rapport à ses voisins, selon l'équation suivante :

$$StdDeviationFrame_{[x,y]} = \sqrt{\mu\left(Frame_{[x,y]}^2\right) - \left[\mu\left(Frame_{[x,y]}\right)\right]^2}$$

où Frame$_{[x, y]}$ est la valeur du pixel de coordonnées [x, y] de l'image courante (c'est-à-dire sa valeur de luminosité), $\mu$ représente un filtrage moyen, avec un noyau par exemple de 3 x 3.

Toujours dans cet exemple, le module de traitement 20 est configuré pour calculer une matrice appelée GlobalStdDeviation dont la valeur de chaque pixel correspond à la moyenne dans le temps de l'écart-type du pixel de mêmes coordonnées dans une série d'images antérieures du flux vidéo en utilisant une enveloppe exponentielle selon l'équation suivante, pour chaque pixel :

$$\text{GlobalStdDeviation}_{t[x,y]} = (1 - \alpha) \times (\text{GlobalStdDeviation}_{t-1[x,y]}) + (\alpha) \times (\text{StdDeviationFrame}_{[x,y]})$$

où $\alpha$ a la même valeur que celle utilisée pour calculer GlobalAverage.

De préférence, le module de traitement 20 est configuré pour déterminer une matrice de surbrillance pixel par pixel BrighterMatrix selon l'équation suivante :

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > \rho \\ and \\ Frame_{[x,y]} > GlobalAverage_{[x,y]} \end{cases} \\ 0, & Otherwise \end{cases}$$

où Frame$_{[x, y]}$ est l'image courante, [x, y] sont les coordonnées d'un pixel de l'image courante Frame$_{[x, y]}$, et $\rho$ est un paramètre à établir selon l'application. De préférence, la valeur de $\rho$ est proche de 0, par exemple inférieure à 0.025, afin de réduire le bruit dans la matrice de surbrillance. Les valeurs de cette matrice de surbrillance correspondent à l'écart d'intensité actuel de chaque pixel par rapport à l'intensité moyenne dans le temps, pondéré par l'écart type de la luminosité moyenné dans le temps.

Le module de traitement 20 est aussi configuré pour déterminer une matrice de compensation en limitant (c'est-à-dire en bornant) les valeurs de la matrice de surbrillance déterminée entre une valeur minimum et une valeur maximum, par exemple entre 1 et 5, afin de limiter les valeurs aberrantes. Autrement dit, une telle détermination permet de conserver les valeurs dont la dynamique est pertinente après la normalisation, en limitant notamment les valeurs trop élevées.

De préférence, le module de traitement 20 est également configuré pour normaliser les valeurs de la matrice de compensation entre 0 et 1.

Le module de traitement 20 est configuré pour segmenter la matrice de surbrillance déterminée afin d'obtenir une image binaire. Selon la forme de réalisation préférée, la matrice de surbrillance est tout d'abord lissée avec un filtre Gaussien et ensuite les valeurs de la matrice de surbrillance sont plafonnées à une valeur, par exemple égale à cinq fois l'écart-type de la luminosité moyenné dans le temps, afin de ne conserver que la dynamique pertinente pour la détection des perturbations lumineuses. Puis, le module de traitement 20 est configuré pour déterminer la matrice de surbrillance segmentée en utilisant un algorithme de seuillage automatique à la matrice lissée, par exemple selon l'algorithme de Li (Li & Tam, 1998). La matrice de surbrillance segmentée peut ensuite être normalisée entre 0 et 1.

Le module de traitement 20 est configuré pour déterminer un masque à partir de la matrice de surbrillance segmentée. Ce masque sera appliqué à la matrice de compensation afin d'obtenir une matrice de filtrage (décrite ci-après).

De préférence, le masque est obtenu en appliquant un processus morphologique à la matrice de surbrillance segmentée. Ce processus comprend une érosion avec un noyau de taille N, suivi d'une dilatation avec un noyau de taille N+2 et d'une érosion avec un noyau de taille N. La taille N du noyau est dépendante de la taille de l'image et du niveau de filtrage souhaité. Ceci sert à regrouper les pixels dans des régions (groupes) plus compactes.

Ensuite, en utilisant un algorithme de détection de groupes de pixels compacts, plus connu par l'homme du métier sous le nom de « blobs », le module de traitement 20 est configuré pour détecter les blobs. Selon la nature de l'application et les caractéristiques souhaitées, certains de ces blobs seront traités différemment.

Par exemple, si on utilise comme critère la surface du blob, on peut décider de traiter différemment les blobs avec une surface inférieure à un seuil prédéterminé, la valeur de ce seuil dépendant de l'application. Dans un exemple de détection de piétons et de voitures, ceci permet de traiter les blobs correspondant potentiellement aux piétons (représentant une surface moins importante) des blobs correspondant à des zones d'éclairage telles que la projection des phares d'un véhicule.

Finalement, pour chaque blob, on utilise les coordonnés de chacun de ses pixels et on ajuste la valeur du pixel correspondant (de mêmes coordonnées) dans la matrice de compensation, ce qui donne comme résultat la matrice de filtrage comme cela sera décrit ci-après. On peut par exemple ajuster la valeur à 1 pour les pixels à supprimer du premier-plan (zones éclairées, blobs avec une surface importante) et à 0 pour les pixels à garder dans le premier-plan (par exemple, des piétons avec vestes claires).

Le module de traitement 20 est configuré pour appliquer le masque à la matrice de compensation afin d'obtenir une matrice de filtrage.

La matrice de filtrage permet de filtrer les zones de l'image courante du premier-plan qui ont des caractéristiques particulières, en fonction de l'application visée. De manière préférée, le masque modifie des régions (zones) de grande taille pour assurer son élimination (la taille des régions est un paramètre de configuration). Toujours de manière préférée, le masque modifie aussi des régions (zones) de petite taille pour assurer leur permanence. Par exemple, dans le cas d'un éclairage intelligent où le but de la détection est de trouver des piétons, ce sont les zones de petite taille qui seront sauvegardées afin d'éviter l'effacement des potentielles détections de piétons.

Ainsi, les pixels de la matrice de filtrage dont la valeur est égale à 1 iront supprimer complètement la détection du pixel correspondant lors du filtrage du premier plan de l'image courante et les pixels dont la valeur est égale à 0 ne modifieront pas la détection du pixel correspondant lors du filtrage.

Dans une forme de réalisation préférée, le module de traitement 20 est aussi configuré pour lisser la matrice de filtrage avant que celle-ci ne soit appliquée à l'image courante du premier-plan. De préférence, ce lissage est réalisé avec un filtre Gaussien (par exemple d'écart-type $\sigma$ = 3 et un noyau de 7 x 7 pixels), et ensuite une normalisation des valeurs de des pixels, de préférence entre 0 et 1.

Le module de traitement 20 est configuré pour filtrer le premier-plan de l'image courante en appliquant la matrice de filtrage afin de réduire, voire supprimer les zones de pollution lumineuse dans les images du flux d'images.

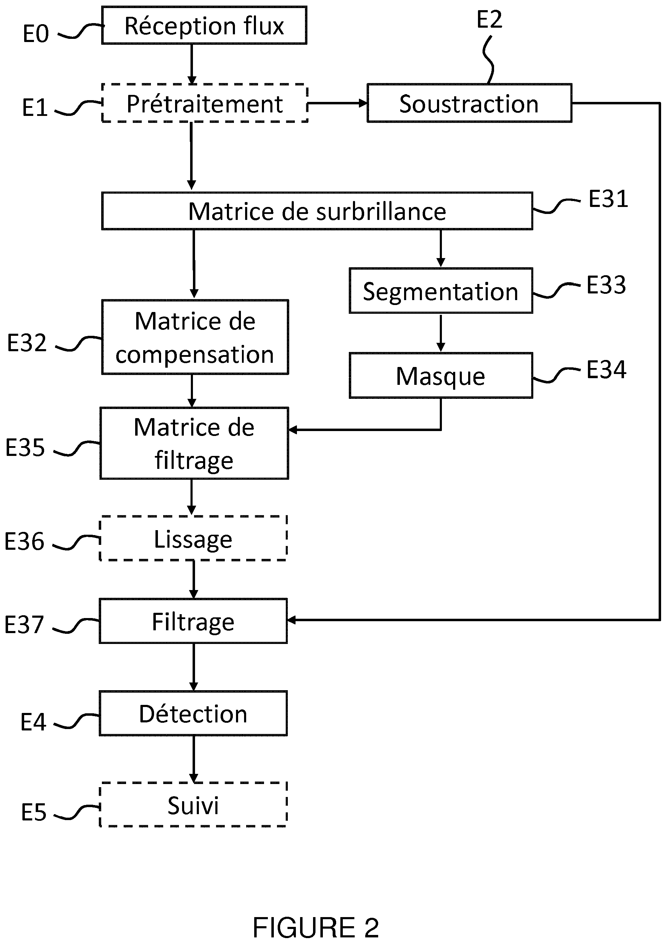

L'invention va maintenant être décrite dans sa mise en oeuvre en référence à la **figure 2.**

La caméra 100 acquière tout d'abord un flux vidéo d'images et l'envoie sur le lien de communication L1 au module de traitement 20 qui le reçoit dans une étape E0.

Ensuite, pour chaque image du flux d'image, le module de traitement 20 réalise les étapes décrites ci-après. Par les termes « image courante » ou « frame », on entend l'image du flux d'images qui est en train d'être traitée, les images étant traitées successivement dans l'ordre dans lequel elles sont séquencées dans le flux d'images capturées par la caméra 100.

Tout d'abord, dans une étape E1, le module de traitement 20 réalise un prétraitement de l'image courante Frame. Le module de traitement 20 transforme l'image courante Frame en image en niveaux de gris, lisse l'image courante Frame pour enlever partiellement le bruit puis augmente le contraste.

Ensuite, dans une étape E2, le module de traitement 20 soustrait l'arrière-plan représenté dans l'image prétraitée afin d'obtenir une image dite du premier plan de l'image courante Frame, c'est-à-dire représentant le premier plan de l'image courante Frame.

Cette soustraction peut être réalisée en utilisant un Modèle de Mélange Gaussien (GMM ou « Gaussian Mixture Model » en langue anglaise) qui consiste à estimer avec un ensemble de fonctions de distribution Gaussienne la distribution des valeurs de luminosité pour chacun des pixels des images acquises par la caméra afin de différencier les pixels dont la luminosité ne varie pas dans le temps, ou faiblement, dont on considère qu'ils représentent l'arrière-plan de la scène filmée, des pixels dont la luminosité varie plus fortement, dont on considère qu'ils représentent potentiellement alors des objets en mouvement

Le module de traitement 20 va ensuite opérer un post-traitement de l'image courante, qui peut être réalisé en partie en parallèle des étapes de prétraitement (E1) et de soustraction (E2).

Pour réaliser ce post-traitement, le module de traitement 20 détermine tout d'abord, dans une étape E31, une matrice de surbrillance identifiant les pixels de l'image courante Frame dont la luminosité est supérieure à la luminosité moyenne dans le temps. Autrement dit, la surbrillance est déterminée à partir de la variation de la luminosité actuelle par rapport à la moyenne dans le temps de la luminosité de chaque pixel de l'image courante Frame.

A cette fin, dans un mode de réalisation préféré, le module de traitement détermine un filtrage Gaussien à partir d'un noyau 3 x 3 dans le but de lisser l'image courante Frame. Ensuite, le module de traitement calcule la moyenne dans le temps GlobalAverage de la luminosité de chaque pixel de l'image courante selon l'équation suivante :

$$GlobalAverage_{t[x,y]} = (1 - \alpha) * GlobalAverage_{t-1[x,y]} + \alpha * Frame_{[x,y]}$$

où [x, y] sont les coordonnées d'un pixel de l'image et $\alpha$ est un paramètre entre 0 et 1 à établir selon chaque application qui contrôle la décadence de l'enveloppe exponentielle. La valeur initiale de GlobalAverage peut être la première image du flux vidéo reçu de la caméra 100. Ensuite, le module de traitement 20 calcule l'écart-type moyen GlobalStdDeviation de la luminosité de chaque pixel de l'image courante Frame dans le temps, c'est à dire à partir d'une pluralité d'images successives extraites du flux d'images. Pour ce faire, le module de traitement 20 calcule tout d'abord une image StdDeviationFrame dont la valeur de chaque pixel est l'écart type par rapport à ses voisins puis calcule ensuite une image GlobalStdDeviation dont la valeur de chaque pixel correspond à la moyenne dans le temps de l'écart-type du pixel de mêmes coordonnées dans une série d'images antérieures du flux vidéo. Cette moyenne peut être calculée avec une enveloppe exponentielle selon l'équation suivante :

$$GlobalStdDeviation_{t[x,y]} = (1 - \alpha) * GlobalStdDeviation_{t-1[x,y]} + \alpha * StdDeviationFrame_{[x,y]}$$

où [x, y] sont les coordonnées d'un pixel de l'image et $\alpha$ a la même valeur que celle utilisée pour calculer GlobalAverage. Ensuite, le module de traitement 20 détermine une matrice de surbrillance identifiant les pixels de l'image courante dont la luminosité est supérieure à la luminosité moyenne selon l'équation suivante :

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > \rho \\ and \\ Frame_{[x,y]} > GlobalAverage_{[x,y]} \end{cases} \\ 0, & Otherwise \end{cases}$$

où [x, y] sont les coordonnées d'un pixel de l'image, $Frame_{[x,y]}$ est l'image courante, et $\rho$ est un paramètre à établir selon l'application. De préférence, la valeur de $\rho$ est proche de 0 afin de réduire le bruit dans la matrice de surbrillance.

Dans une étape E32, le module de traitement 20 détermine ensuite la matrice de compensation. Pour ce faire, dans cet exemple préféré, le module de traitement 20 limite les valeurs des pixels de la matrice de surbrillance déterminée entre une valeur minimum et une valeur maximum puis normalise la valeur de chaque pixel, de préférence entre 0 et 1.

En parallèle, dans une étape E33, le module de traitement 20 segmente la matrice de surbrillance déterminée. Pour ce faire, dans cet exemple préféré, le module de traitement opère tout d'abord un lissage de la matrice de surbrillance déterminée en utilisant un filtre de lissage basé sur la moyenne avec un noyau dépendant de la taille de l'image. Le module de traitement 20 limite ensuite la valeur de chaque pixel de la matrice de surbrillance déterminée et lissée de sorte qu'elle soit inférieure à une valeur seuil afin de limiter les valeurs aberrantes. Le module de traitement 20 binarise ensuite la matrice de surbrillance lissée et seuillée afin d'obtenir la matrice de surbrillance segmentée. Cette binarisation consiste à rendre la valeur de chaque pixel égal à 0 ou à 1. Elle peut par exemple être réalisée en utilisant un seuil calculé à partir de l'algorithme de Li (Li et Tam, 1998).

Dans une étape E34, le module de traitement 20 détermine un masque à partir de la matrice de surbrillance segmentée. A cette fin, le module de traitement 20 utilise tout d'abord un processus morphologique sur la matrice de surbrillance segmentée qui comprend une érosion de l'image segmentée avec un noyau de taille N, suivi d'une dilatation avec un noyau de taille N+2 et finalement d'une érosion avec un noyau de taille N, la taille N du noyau étant dépendante de la taille de l'image et du niveau de filtrage souhaité. Le module de traitement 20 détermine ensuite, dans la matrice de surbrillance morphologiquement traitée, des groupes de pixels connectés (blobs). Cette étape peut par exemple être réalisée en utilisant l'algorithme de Suzuki (Suzuki, 1985). Le module de traitement 20 sépare ensuite les groupes de pixels connectés selon leur surface. Ceux dont la surface est inférieure à un seuil auront la valeur minimum (par exemple 0), ceux dont la surface est supérieure ou égal au même seuil auront la valeur maximum (par exemple 1).

Dans une étape E35, le module de traitement 20 génère une matrice de filtrage en appliquant le masque déterminé à la matrice de compensation. Pour ce faire, pour chaque groupe de pixels, on utilise les coordonnés de chacun de ses pixels et sa valeur pour assigner la même valeur au pixel correspondant (même coordonnés) dans la matrice de compensation.

Dans une étape E36, le module de traitement 20 lisse la matrice de filtrage, en utilisant par exemple un filtre Gaussien.

Le module de traitement 20 filtre alors, dans une étape E37, le premier-plan de l'image courante en lui appliquant la matrice de filtrage lissée afin de réduire les zones de pollution lumineuse dans les images du flux d'images.

Dans une étape E4, le module de traitement 20 détecte alors aisément un objet ou une personne dans le flux d'image le cas échéant grâce aux pixels restants dans le premier plan obtenu.

Le procédé peut aussi dans une étape E5 optionnelle suivre une personne ou un objet détecté dans les images grâce à un algorithme de « tracking » (connu en soi) adapté à l'application souhaitée.

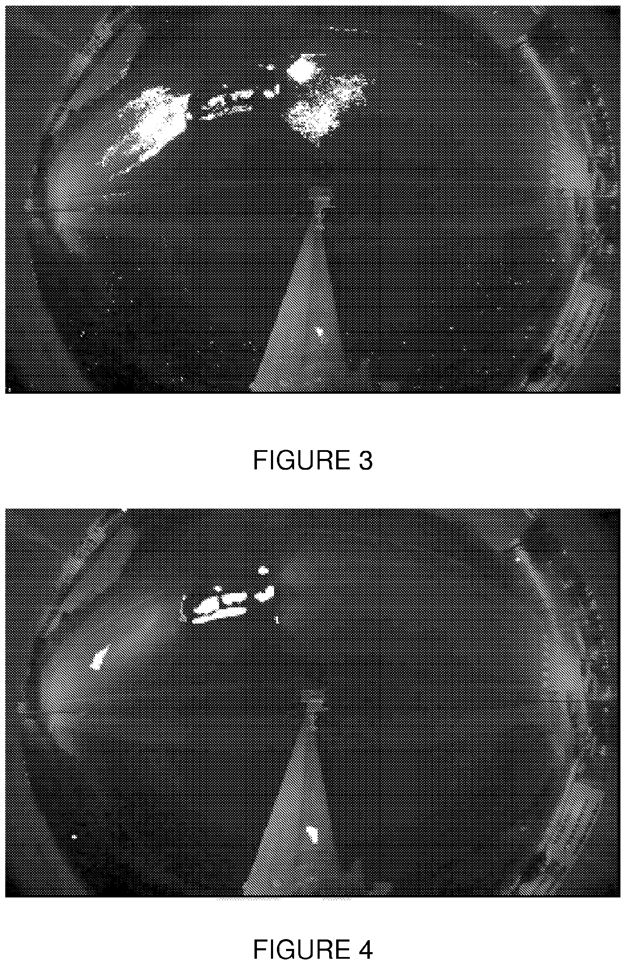

A la **figure 3,** on a représenté une image capturée de nuit par une caméra montée sur un lampadaire et sur laquelle on distingue un véhicule automobile ainsi que les zones éclairées par ses phares. Sur cette **figure 3,** la majorité des pixels blancs correspondent aux pixels détectés comme premier-plan avant d'appliquer le procédé de l'invention. A la **figure 4**, on a représenté l'image de la **figure 3** qui a été traitée par le procédé selon l'invention. On constate ainsi que les zones éclairées par les phares du véhicule ont sensiblement disparues du premier plan dans les images traitées, ce qui permet de rendre la détection de personne ou d'objet (en l'occurrence le véhicule) particulièrement aisée et fiable, notamment lorsqu'on applique un algorithme de type GMM.

## Revendications

1. Procédé de traitement d'images pour le filtrage de la pollution lumineuse apparaissant dans un flux vidéo d'images acquis par une caméra vidéo, ledit procédé étant **caractérisé en ce qu'**il comprend, pour une image courante dudit flux vidéo d'images, les étapes de :

   • soustraction (E2) de l'arrière-plan représenté dans ladite image courante afin d'obtenir le premier-plan de l'image courante,
   • détermination (E31), pixel par pixel, d'une matrice de surbrillance identifiant les pixels de l'image courante dont la luminosité est supérieure à la luminosité moyenne dans le temps des pixels de l'image calculée à partir d'une pluralité d'images successives extraites du flux d'images,
   • détermination (E32) d'une matrice de compensation par bornage des valeurs des pixels de la matrice de surbrillance déterminée entre une valeur minimum et une valeur maximum,
   • segmentation (E33) de la matrice de surbrillance déterminée,
   • détermination (E34) d'un masque à partir de la matrice de surbrillance segmentée,
   • application (E35) dudit masque à la matrice de compensation déterminée afin d'obtenir une matrice de filtrage, et
   • filtrage (E37) du premier-plan de l'image courante par l'application de ladite matrice de filtrage afin de réduire les zones de pollution lumineuse dans les images du flux d'images.

2. Procédé selon la revendication 1, dans lequel la détermination (E31) d'une matrice de surbrillance comprend les sous-étapes de :

   • calcul de la moyenne dans le temps de la luminosité de chaque pixel de l'image courante à partir d'une pluralité d'images successives extraites du flux d'images,
   • calcul de la moyenne dans le temps des écarts-type de la luminosité de chaque pixel de l'image courante à partir d'une pluralité d'images successives extraites du flux d'images,
   • détermination d'une matrice de surbrillance identifiant les pixels de l'image courante dont la luminosité est supérieure à la luminosité moyenne à partir de la moyenne de la luminosité de chaque pixel de l'image courante calculée et de la moyenne dans le temps des écarts-type de la luminosité de chaque pixel de l'image courante calculée.

3. Procédé selon la revendication 2, dans lequel la matrice de surbrillance est déterminée pixel par pixel selon l'équation suivante :

**EP 3 616 161 B1**

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > \rho \\ and \\ Frame_{[x,y]} > GlobalAverage_{[x,y]} \end{cases} \\ 0, & Otherwise \end{cases}$$

où $Frame_{[x,y]}$ est l'image courante, [x, y] sont les coordonnées d'un pixel de l'image, $GlobalAverage_{[x,y]}$ est la moyenne de la luminosité dans le temps de chaque pixel de l'image courante $Frame_{[x,y]}$ à partir d'une pluralité d'images successives extraites du flux d'images, $GlobalStdDeviation_{[x,y]}$ est la moyenne dans le temps des écarts-type de la luminosité de chaque pixel de l'image courante $Frame_{[x,y]}$ à partir d'une pluralité d'images successives extraites du flux d'images, $StdDeviationFrame_{[x,y]}$ est l'écart-type moyen de la luminosité de chaque pixel de l'image courante $Frame_{[x,y]}$ par rapport à ses voisins et $\rho$ est un coefficient de réduction de bruit.

4. Procédé selon l'une des revendications précédentes, dans lequel la détermination (E32) de la matrice de compensation comprend, suite au bornage des valeurs des pixels, une normalisation desdites valeurs bornées, de préférence entre 0 et 1.

5. Procédé selon l'une des revendications précédentes, dans lequel la segmentation (E33) de la matrice de surbrillance déterminée comprend les sous-étapes de :

   • lissage de la matrice de surbrillance déterminée,
   • limitation de la valeur des pixels de la matrice de surbrillance déterminée en-dessous d'une valeur seuil, et
   • binarisation de la matrice de surbrillance limitée afin d'obtenir la matrice de surbrillance segmentée.

6. Procédé selon l'une des revendications précédentes, dans lequel la détermination (E34) du masque comprend les sous-étapes de :

   • application d'un processus morphologique à la matrice de surbrillance segmentée,
   • détermination, dans ladite matrice de surbrillance morphologiquement traitée, des groupes de pixels dont le nombre de pixels est inférieur ou supérieur à un seuil prédéterminé, et
   • binarisation à la valeur 1 des pixels des groupes dont le nombre déterminé de pixels est supérieur au seuil prédéterminé et à la valeur 0 des pixels des groupes dont le nombre déterminé de pixels est inférieur au seuil prédéterminé.

7. Procédé selon l'une des revendications précédentes, comprenant en outre, préalablement à l'étape de filtrage, une étape de lissage de la matrice de filtrage.

8. Procédé selon l'une des revendications précédentes, comprenant une étape de détection d'une personne ou d'un objet représenté dans le flux d'images filtrées.

9. Module de traitement (20) pour le filtrage de la pollution lumineuse apparaissant sur un flux d'images acquis par une caméra (100) vidéo, ledit module de traitement (20) étant **caractérisé en ce qu'**il est configuré pour recevoir un flux d'images de ladite caméra (100) vidéo, et, pour une image courante dudit flux d'images :

   • soustraire l'arrière-plan représenté dans ladite image courante afin d'obtenir le premier-plan de l'image courante,
   • déterminer, pixel par pixel, une matrice de surbrillance identifiant les pixels de l'image courante dont la luminosité est supérieure à la luminosité moyenne dans le temps des pixels de l'image calculée à partir d'une pluralité d'images successives extraites du flux d'images,
   • déterminer une matrice de compensation par bornage des valeurs des pixels de la matrice de surbrillance déterminée entre une valeur minimum et une valeur maximum,
   • segmenter la matrice de surbrillance déterminée,
   • déterminer un masque à partir de la matrice de surbrillance segmentée,
   • appliquer ledit masque à la matrice de compensation déterminée afin d'obtenir une matrice de filtrage, et
   • filtrer le premier-plan de l'image courante par l'application de ladite matrice de filtrage afin de réduire les zones de pollution lumineuse dans les images du flux d'images.

10. Système (1) de traitement d'images pour le filtrage de la pollution lumineuse apparaissant sur un flux d'images acquis par une caméra (100) vidéo, ledit système (1) étant **caractérisé en ce qu'**il comprend une caméra (100) vidéo et un module de traitement (20), selon la revendication précédente, relié à ladite caméra (100) vidéo par un lien de communication (L1).

**Patentansprüche**

1. Bildverarbeitungsverfahren zur Filterung der in einem Videostrom von von einer Videokamera aufgenommenen Bildern auftretenden Lichtverschmutzung, wobei das Verfahren **dadurch gekennzeichnet ist, dass** es für ein aktuelles Bild des Videostroms von Bildern die folgenden Schritte enthält:

   • Subtraktion (E2) des im aktuellen Bild dargestellten Hintergrunds, um den Vordergrund des aktuellen Bilds zu erhalten,
   • Bestimmung (E31), Pixel für Pixel, einer Aufhellungsmatrix, die die Pixel des aktuellen Bilds identifiziert, deren Helligkeit größer ist als die zeitliche mittlere Helligkeit der Pixel des Bilds, berechnet ausgehend von einer Vielzahl aufeinanderfolgender Bilder, die aus dem Bilderstrom extrahiert werden,
   • Bestimmung (E32) einer Kompensationsmatrix durch Eingrenzung der Werte der Pixel der bestimmten Aufhellungsmatrix zwischen einem minimalen Wert und einem maximalen Wert,
   • Segmentierung (E33) der bestimmten Aufhellungsmatrix,
   • Bestimmung (E34) einer Maske ausgehend von der segmentierten Aufhellungsmatrix,
   • Anwendung (E35) der Maske an die bestimmte Kompensationsmatrix, um eine Filtermatrix zu erhalten, und
   • Filterung (E37) des Vordergrunds des aktuellen Bilds durch die Anwendung der Filtermatrix, um die Lichtverschmutzungszonen in den Bildern des Bilderstroms zu reduzieren.

2. Verfahren nach Anspruch 1, wobei die Bestimmung (E31) einer Aufhellungsmatrix die folgenden Teilschritte enthält:

   • Berechnung des zeitlichen Mittelwerts der Helligkeit jedes Pixels des aktuellen Bilds ausgehend von einer Vielzahl von aus dem Bilderstrom extrahierten aufeinanderfolgenden Bildern, die,
   • Berechnung des zeitlichen Mittelwerts der Standardabweichungen der Helligkeit jedes Pixels des aktuellen Bilds ausgehend von einer Vielzahl von aus dem Bilderstrom extrahierten aufeinanderfolgenden Bildern,
   • Bestimmung einer Aufhellungsmatrix, die die Pixel des aktuellen Bilds identifiziert, deren Helligkeit größer ist als die mittlere Helligkeit, ausgehend vom berechneten Mittelwert der Helligkeit jedes Pixels des aktuellen Bilds und vom zeitlichen Mittelwert der Standardabweichungen der Helligkeit jedes Pixels des berechneten aktuellen Bilds.

3. Verfahren nach Anspruch 2, wobei die Aufhellungsmatrix Pixel für Pixel gemäß der folgenden Gleichung bestimmt wird:

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > p \\ and \\ Frame_{[x,y]} > GlobalAverage_{[x,y]} \end{cases} \\ 0, & Otherwise \end{cases}$$

wobei Frame$_{[x,y]}$ das aktuelle Bild ist, [x,y] die Koordinaten eines Pixels des Bilds sind, *GlobalAverage*$_{[x,y]}$ der zeitliche Mittelwert der Helligkeit jedes Pixels des aktuellen Bilds Frame$_{[x,y]}$ ist, ausgehend von einer Vielzahl von aus dem Bilderstrom extrahierten aufeinanderfolgenden Bildern, *GlobalStdDeviation*$_{[x,y]}$ der zeitliche Mittelwert der Standardabweichungen der Helligkeit jedes Pixels des aktuellen Bilds Frame$_{[x,y]}$ ist, ausgehend von einer Vielzahl von aus dem Bilderstrom extrahierten aufeinanderfolgenden Bildern, *StdDeviationFrame*$_{[x,y]}$ die mittlere Standardabweichung der Helligkeit jedes Pixels des aktuellen Bilds Frame$_{[x,y]}$ bezüglich seiner Nachbarn und ρ ein Rauschminderungskoeffizient ist.

4. Verfahren nach einem der vorhergehenden Ansprüche, wobei die Bestimmung (E32) der Kompensationsmatrix nach der Eingrenzung der Werte der Pixel eine Normierung der eingegrenzten Werte enthält, vorzugsweise zwischen 0 und 1.

5. Verfahren nach einem der vorhergehenden Ansprüche, wobei die Segmentierung (E33) der bestimmten Aufhellungsmatrix die folgenden Teilschritte enthält:

• Glättung der bestimmten Aufhellungsmatrix,
• Begrenzung des Werts der Pixel der bestimmten Aufhellungsmatrix unterhalb eines Schwellenwerts, und
• Binärisierung der begrenzten Aufhellungsmatrix, um die segmentierte Aufhellungsmatrix zu erhalten.

6. Verfahren nach einem der vorhergehenden Ansprüche, wobei die Bestimmung (E34) der Maske die folgenden Teilschritte enthält:

• Anwendung eines morphologischen Prozesses an die segmentierte Aufhellungsmatrix,
• Bestimmung, in der morphologisch verarbeiteten Aufhellungsmatrix, von Gruppen von Pixeln, deren Pixelanzahl niedriger oder höher ist als eine vorbestimmte Schwelle, und
• Binärisierung auf den Wert 1 der Pixel der Gruppen, deren bestimmte Pixelanzahl höher ist als die vorbestimmte Schwelle, und auf den Wert 0 der Pixel der Gruppen, deren bestimmte Pixelanzahl niedriger ist als die vorbestimmte Schwelle.

7. Verfahren nach einem der vorhergehenden Ansprüche, das außerdem vor dem Filterungsschritt einen Schritt der Glättung der Filtermatrix enthält.

8. Verfahren nach einem der vorhergehenden Ansprüche, das einen Schritt der Erkennung einer Person oder eines Objekts enthält, der/das im Strom gefilterter Bilder dargestellt ist.

9. Verarbeitungsmodul (20) zur Filterung der in einem von einer Videokamera (100) aufgenommen Bilderstrom auftretenden Lichtverschmutzung, wobei das Verarbeitungsmodul (20) **dadurch gekennzeichnet ist, dass** es konfiguriert ist, einen Bilderstrom von der Videokamera (100) zu empfangen, und für ein aktuelles Bild des Bilderstroms:

• den im aktuellen Bild dargestellten Hintergrund zu subtrahieren, um den Vordergrund des aktuellen Bilds zu erhalten,
• Pixel für Pixel eine Aufhellungsmatrix zu bestimmen, die die Pixel des aktuellen Bilds identifiziert, deren Helligkeit größer ist als die zeitliche mittlere Helligkeit der Pixel des berechneten Bilds, ausgehend von einer Vielzahl von aus dem Bilderstrom extrahierten aufeinanderfolgenden Bildern,
• eine Kompensationsmatrix durch Eingrenzung der Werte der Pixel der bestimmten Aufhellungsmatrix zwischen einem minimalen Wert und einem maximalen Wert zu bestimmen,
• die bestimmte Aufhellungsmatrix zu segmentieren,
• ausgehend von der segmentierten Aufhellungsmatrix eine Maske zu bestimmen,
• die Maske an die bestimmte Kompensationsmatrix anzuwenden, um eine Filtermatrix zu erhalten, und
• den Vordergrund des aktuellen Bilds durch die Anwendung der Filtermatrix zu filtern, um die Lichtverschmutzungszonen in den Bildern des Bilderstroms zu reduzieren.

10. Bildverarbeitungssystem (1) zur Filterung der Lichtverschmutzung, die in einem von einer Videokamera (100) aufgenommenen Bilderstrom auftritt, wobei das System (1) **dadurch gekennzeichnet ist, dass** es eine Videokamera (100) und ein Verarbeitungsmodul (20) nach dem vorhergehenden Anspruch enthält, das mit dem Videokamera (100) durch eine Kommunikationsverbindung (L1) verbunden ist.

**Claims**

1. Image-processing method for filtering light pollution appearing in a video image stream acquired by a video camera, said method being **characterized in that** it comprises, for a current image of said video image stream, the steps of:

• subtracting (E2) the background represented in said current image in order to obtain the foreground of the current image,
• determining (E31), pixel by pixel, a brightening matrix identifying the pixels of the current image the brightness of which is higher than the time-averaged brightness of the pixels of the image, which is computed from a plurality of successive images extracted from the image stream,
• determining (E32) a compensating matrix by restricting the values of the pixels of the determined brightening matrix to between a minimum value and a maximum value,
• segmenting (E33) the determined brightening matrix,
• determining (E34) a mask from the segmented brightening matrix,
• applying (E35) said mask to the determined compensating matrix in order to obtain a filtering matrix, and

• filtering (E37) the foreground of the current image by applying said filtering matrix in order to decrease the zones of light pollution in the images of the image stream.

2. Method according to Claim 1, wherein the step (E31) of determining a brightening matrix comprises the substeps of:

• computing the time average of the brightness of each pixel of the current image from a plurality of successive images extracted from the image stream,
• computing the time average of the standard deviations of the brightness of each pixel of the current image from a plurality of successive images extracted from the image stream,
• determining a brightening matrix identifying the pixels of the current image the brightness of which is higher than the average brightness on the basis of the computed average of the brightness of each pixel of the current image and of the computed time average of the standard deviations of the brightness of each pixel of the current image.

3. Method according to the Claim 2, wherein the brightening matrix is determined pixel by pixel using the following equation:

$$BrighterMatrix_{[x,y]} = \begin{cases} \dfrac{Frame_{[x,y]} - GlobalAverage_{[x,y]}}{GlobalStdDeviation_{[x,y]}}, & \begin{cases} StdDeviationFrame_{[x,y]} > \rho \\ and \\ Frame_{[x,y]} > GlobalAverage_{[x,y]} \end{cases} \\ 0, & Otherwise \end{cases}$$

where $Frame_{[x, y]}$ is the current image, [x, y] are the coordinates of a pixel of the image, $GlobalAverage_{[x,y]}$ is the time average of the brightness of each pixel of the current image $Frame_{[x, y]}$ based on a plurality of successive images extracted from the image stream, $GlobalStdDeviation_{[x,y]}$ is the time average of the standard deviations of the brightness of each pixel of the current image $Frame_{[x, y]}$ based on a plurality of successive images extracted from the image stream, $StdDeviationFrame_{[x,y]}$ is the average standard deviation of the brightness of each pixel of the current image $Frame_{[x, y]}$ with respect to its neighbours and $\rho$ is a noise-decreasing coefficient.

4. Method according to one of the preceding claims, wherein the step (E32) of determining the compensating matrix comprises, following the restriction of the values of the pixels, a normalization, of said restricted values, preferably between 0 and 1.

5. Method according to one of the preceding claims, wherein the step (E33) of segmenting the determined brightening matrix comprises the substeps of:

• smoothing the determined brightening matrix,
• limiting the value of the pixels of the determined brightening matrix to below a threshold value, and
• binarizing the limited brightening matrix in order to obtain the segmented brightening matrix.

6. Method according to one of the preceding claims, wherein the step (E34) of determining the mask comprises the substeps of:

• applying a morphological process to the segmented brightening matrix,
• determining, in said morphologically processed brightening matrix, blobs of pixels the number of pixels of which is lower or higher than a preset threshold, and
• binarizing to the value 1 the pixels of the blobs the determined number of pixels of which is higher than the preset threshold and to the value 0 the pixels of the blobs the determined number of pixels of which is lower than the preset threshold.

7. Method according to one of the preceding claims, furthermore comprising, prior to the filtering step, a step of smoothing the filtering matrix.

8. Method according to one of the preceding claims, comprising a step of detecting a person or an object represented in the filtered-image stream.

9. Processing module (20) for filtering light pollution appearing in an image stream acquired by a video camera (100), said processing module (20) being **characterized in that** it is configured to receive an image stream from said video camera (100), and, for a current image of said image stream:

- to subtract the background represented in said current image in order to obtain the foreground of the current image,
- to determine, pixel by pixel, a brightening matrix identifying the pixels of the current image the brightness of which is higher than the time-averaged brightness of the pixels of the image, which is computed from a plurality of successive images extracted from the image stream,
- to determine a compensating matrix by restricting the values of the pixels of the determined brightening matrix to between a minimum value and a maximum value,
- to segment the determined brightening matrix,
- to determine a mask from the segmented brightening matrix,
- to apply said mask to the determined compensating matrix in order to obtain a filtering matrix, and
- to filter the foreground of the current image by applying said filtering matrix in order to decrease the zones of light pollution in the images of the image stream.

10. Image-processing system (1) for filtering light pollution appearing in an image stream acquired by a video camera (100), said system (1) being **characterized in that** it comprises a video camera (100), and a processing module (20) according to the preceding claim, said module being linked to said video camera (100) by a communication link (L1).

FIGURE 1

E0 — Réception flux

E2

E1 — Prétraitement → Soustraction

Matrice de surbrillance — E31

Segmentation — E33

E32 — Matrice de compensation

Masque — E34

E35 — Matrice de filtrage

E36 — Lissage

E37 — Filtrage

E4 — Détection

E5 — Suivi

FIGURE 2

FIGURE 3

FIGURE 4

## RÉFÉRENCES CITÉES DANS LA DESCRIPTION

**Documents brevets cités dans la description**

- US 20150278616 A1
- US 5847755 A

- US 20140003720 A1